# EUROPÄISCHE PATENTSCHRIFT

(11) **EP 3 569 575 B1**
(45) Veröffentlichungstag und Bekanntmachung des Hinweises auf die Patenterteilung: **21.10.2020**
(21) Anmeldenummer: 18173100.1
(22) Anmeldetag: 18.05.2018
(51) Int. Cl.: C02F 1/74, C02F 1/02, C02F 1/66, C02F 101/34, C02F 101/36, C02F 101/38, C02F 103/36

(54) **VERFAHREN ZUM ABBAU HALOGENIERTER PARA- ODER ORTHO-HYDROXYANILINE**
METHOD FOR THE DESTRUCTION OF HALOGENATED PARA- OR ORTHO-SUBSTITUTED HYDROXYANILINE
PROCÉDÉ D'EXTRACTION DE PARA OU D'ORTHO-HYDROXY-ANILINES HALOGÉNÉES

(43) Veröffentlichungstag der Anmeldung: 20.11.2019
(73) Patentinhaber: LANXESS Deutschland GmbH, 50569 Köln (DE)
(72) Erfinder: JORDAN, Hartwig, 51467 Bergisch Gladbach (DE)

(56) Entgegenhaltungen:
- CN-A- 1 636 892
- DE-C1- 4 228 569
- US-A1- 2016 340 211
- KOLACZKOWSKI ET AL: "Wet Air Oxidation of Phenol", PROCESS SAFETY AND ENVIRONMENTAL PROTECTION, INSTITUTION OF CHEMICAL ENGINEERS, RUGBY, GB, Bd. 75, Nr. 4, 1. November 1997 (1997-11-01), Seiten 257-265, XP022528517, ISSN: 0957-5820, DOI: 10.1205/095758297529138

## Beschreibung

Die vorliegende Erfindung betrifft Verfahren zum Abbau halogenierter, para- oder ortho-Hydroxyaniline aus wässrigen Medien, vorzugsweise den Abbau von Chlor- oder Brom-substituierten para- oder ortho-Hydroxyanilinen.

Die Verringerung der halogenierten, vorzugsweise Chlor- und/oder Brom-substituierten para- oder ortho-Hydroxyaniline aus wässrigen Medien ist nach ökologischen Gesichtspunkten wünschenswert, da diese Aniline in der Regel umweltschädlich sind und die entsprechenden Abwässer somit weitgehend frei von diesen Verbindungen sein müssen. Nachteiligerweise bleiben diese zudem aufgrund ihrer sauren Hydroxygruppen im wässrigen Medien gelöst und lassen sich nicht durch Strippung entfernen. Ein Maß für die Belastung derartiger Abwässer ist der Parameter "absorbierbares organisch gebundenes Halogen" (AOX), ein Wert, der durch halogenierte para- oder ortho-Hydroxyaniline maßgeblich beeinflusst wird.

Halogenierte para- oder ortho-Hydroxyanilin-haltige Abwässer entstehen z.B. im Spurenbereich bei der katalytischen Hydrierung von Halogennitroaromaten zu halogenierten Anilinen, analog der bekannten Bamberger-Reduktion [Sone, Takaaki; Hamamoto, Kazuhiro; Seiji, Yoshiyuki; Shinkai, Seiji; Manabe, Osamu: "Kinetics and mechanisms of the Bamberger rearrangement. Part 4, Rearrangement of sterically hindered phenylhydroxylamines to 4-aminophenols in aqueous sulphuric acid solution" in J. Chem. Soc. Perkin Trans. II 1981, 1596-1598].

Die wässrige Aufarbeitung der bei der katalytischen Hydrierung von entsprechenden Halogennitroaromaten zu halogenierten Anilinen entstehenden Reaktionsgemische erfolgt im alkalischen Milieu, um eine komplette Isolierung der Halogenaniline durch Freisetzung aus evtl. entstandenen Hydrochloriden zu gewährleisten. Die Wasserphasen können dann noch durch Wasserdampfdestillation (sogenannte "Strippung") von Resten an Produkt befreit werden, enthalten dann aber halogenierte para- oder ortho-Hydroxyaniline.

Aus CN104355455 A ist ein aufwändiges Verfahren zur Entfernung von Hydroxyanilinen (o-Aminophenolen) aus wässrigen Medien beschrieben, bei dem Hydroxyaniline mit einem sehr komplexen Lösungsmittelgemisch extrahiert und anschließend zur Vermischung der beiden Phasen in neutralem Medium Luft oder Stickstoff eingeleitet wird. Anschließend wird das extrahierte wässrige Medium einer Ozonolyse unterworfen. Aus dem Lösemittelextrakt muss anschließend noch das Hydroxyanilin mit Säure ausgewaschen werden, damit das Lösemittel wieder einsetzbar ist. Man erhält nach dem in CN104355455 A beschriebenen Verfahren ein saures wässriges Medium, das anschließend entsorgt werden muss. Noch aufwändiger ist das in Ultrasonics Sonochemistry (2016), 28, 90-99 beschriebene Verfahren zur Entfernung von Chloraminophenolen (Chlor-Hydroxyanilinen), bei dem eine Kombination aus Ultraschall, eine anschließende UV-Behandlung, gefolgt von einer Behandlung mit Ozon durchgeführt wird.

Es bestand die Aufgabe, ein einfaches und kostengünstiges Verfahren zur Entfernung von halogenhaltigen Hydroxyanilinen bereitzustellen, das im wässrigen Medium den Abbau der halogenierten para- oder ortho-Hydroxyanilinen, vorzugsweise Chlor- oder Brom-substituierten Hydroxyanilinen ermöglicht und nach dessen Anwendung sich die AOX-Werte des wässrigen Mediums deutlich reduzieren lassen.

Idealerweise liegen die Werte an halogenhaltigen Hydroxyanilinen des wässrigen Mediums nach der Behandlung unterhalb von 0,003 Gew%.

Überraschenderweise wurde nun gefunden, dass sich die AOX-Werte von wässrigen Medien deutlich verbessern, wenn in das halogenierte para- oder ortho-Hydroxyanilin-haltige wässrigen Medium bei Temperaturen von 70°C bis 100°C bei pH-Werten von 10 bis 14 sauerstoffhaltiges Gas, vorzugsweise Luft, eingeleitet wird.

Gegenstand der vorliegenden Erfindung sind Verfahren zum Abbau der halogenierten para- oder ortho-Hydroxyaniline aus wässrigen Medien, wonach das wässrige Medium bei Temperaturen von 70°C bis 100°C, besonders bevorzugt zwischen 80 und 100°C, bei pH-Werten von 10 bis 14, vorzugsweise 13-14, mit sauerstoffhaltigem Gas, vorzugsweise Luft, behandelt wird.

Halogenierte para- oder ortho-Hydroxyaniline im Sinne der Erfindung sind dabei vorzugsweise Chlor- oder Brom- substituierte Hydroxyaniline, insbesondere 2-Amino-4,5-dichlorphenol.

Wässrige Medien sind dabei vorzugsweise Lösungen, deren Wasseranteil bei > 90 Gew% besonders bevorzugt >95 Gew. %, besonders bevorzugt > 99 Gew%, bezogen auf die Gesamtlösung beträgt.

Luft weist bekanntermaßen als Hauptbestandteile Sauerstoff und Stickstoff auf und diese vorzugsweise in folgenden Anteilen: Stickstoff, vorzugsweise 78-79 Vol%, weiter bevorzugt 78,08 Vol.-%, und Sauerstoff vorzugsweise 20 - 21 Vol%, besonders bevorzugt 20,95 Vol.-%. Daneben enthält Luft vorzugsweise noch die Komponenten Argon, vorzugsweise 0,93 Vol.-%, Kohlenstoffdioxid, vorzugsweise 0,04 Vol.-%, und andere Gase in Spuren.

Das Behandeln mit sauerstoffhaltigen Gasen, vorzugsweise Luft, wird bevorzugt im alkalischen Bereich ausgeführt. Der pH-Wert ist vorzugsweise größer als 13, vorzugsweise 13 - 14. Die pH-Wert-Bestimmung erfolgt dabei bei einer Temperatur von 70°C.

Zur Einstellung des alkalischen pH-Wertes können starke Basen, wie Alkalimetallhydroxide und -carbonate sowie Erdalkalimetallhydroxide, verwendet werden, vorzugsweise Natronlauge.

Um ausreichend hohe Reaktionsgeschwindigkeiten zu erhalten, wird die Behandlung vorzugsweise bei Temperaturen oberhalb 70°C durchgeführt, bevorzugt von 80°C bis 100°C, besonders bevorzugt von 90°C bis 100°C.

Das sauerstoffhaltige Gas, vorzugsweise Luft, kann bei Normaldruck in das wässrigen Medium eingeleitet werden, es ist jedoch auch möglich, auf das wässrige Medium in einem Autoklaven Luft aufzupressen und die Abbaureaktion bei erhöhter Temperatur auszuführen. Hierbei sind Drücke von 1 bis 300 bar möglich, vorzugsweise 2 bis 6 bar.

Die Reaktionszeit für den Abbau beträgt vorzugsweise 2 bis 50 Stunden, besonders bevorzugt 10 bis 30 Stunden (h). Sie sollte zum einen daran bemessen werden, dass die halogenierten, para- oder ortho-Hydroxyaniline, vorzugsweise Chlor- oder Bromsubstituierte Hydroxyaniline analytisch nicht mehr nachweisbar sind oder zumindest deutlich reduziert wurden, und zum anderen daran, dass der AOX-Wert ein akzeptiertes Maß erreicht hat. Idealerweise liegt der AOX-Wert des wässrigen Mediums nach der Behandlung unterhalb von 100 mg/l.

Durch das erfindungsgemäße Verfahren kann vorzugsweise eine um mehr als 70%ige Verringerung des AOX-Wertes entsprechender Abwässer erreicht werden.

In einer Ausführungsform der vorliegenden Erfindung stammt das halogenierte para- oder ortho-Hydroxyanilin- haltige wässrigen Medium aus der Herstellung von Chlor- oder Brom-substituierten Anilinen durch katalytische Hydrierung von Halogennitroaromaten mit Halogen = Cl oder Br. Die Chlor- oder Brom- substituierten Aniline werden dabei vorzugsweise durch Destillation, z.B. Wasserdampfdestillation , abgetrennt.

Ein typisches wässriges Medium hat dabei vorzugsweise einen AOX-Wert von 200 - 300 mg/l, welches bei einem pH-Wert von >13 bei einer Temperatur von 90°C mit Luft behandelt wird. Die Verringerung des AOX-Wertes nach Anwendung des erfindungsgemäßen Verfahrens liegt vorzugsweise bei 70% oder mehr.

Das Einstellen eines alkalischen pH-Wertes von > 10 erfolgt vorzugsweise bereits bei der Wasserdampfdestillation der Reste an Zielprodukten, also im beschriebenen bevorzugten Bereich beim Abtrennen der Halogenaniline. Die danach als Destillationssumpf anfallenden alkalischen Abwässer können direkt in das erfindungsgemäße Verfahren eingebracht werden.

Die katalytische Hydrierung von Halogennitroaromaten mit Halogen = Cl oder Br erfolgt dabei vorzugsweise durch Umsetzung von chlorierten aromatischen Nitroverbindungen mit Wasserstoff in Gegenwart eines Hydrierkatalysators unter Druck bei erhöhter Temperatur in Gegenwart eines Lösungsmittels und geringer Mengen einer basischen Verbindung, vorzugsweise gemäß US-A 4 230 637, bevorzugt bei Temperaturen von 120° bis 160° C und Drücken von 50 bis 250 bar.

Als Katalysatoren werden dabei vorzugsweise eingesetzt: Raney-Nickel, Raney-Cobalt oder Edelmetalle, vorzugsweise Palladium und Platin, die in feinverteilter Form auf Träger vorzugsweise Aktivkohle aufgebracht sind.

Besonders bevorzugt werden halogenierte para- oder ortho-Hydroxyanilin-haltige Abwässer, die aus der Herstellung von wasserdampfflüchtigen Halogenanilinen stammen eingesetzt, vorzugsweise 3,4-Dichloranilin, 4-Chloranilin, 2-Chloranilin und 2,3-Dichloranilin.

Die Herstellung von 3,4-Dichloranilin erfolgt dabei vorzugsweise über die katalytische Hydrierung von 3,4-Dichlornitrobenzol mit Wasserstoff in Gegenwart einer der vorgenannten Hydrierkatalysatoren unter Druck bei erhöhter Temperatur in Gegenwart eines Lösungsmittels und geringer Mengen einer basischen Verbindung, vorzugsweise gemäß US-A 4 230 637, bevorzugt bei Temperaturen von 120° bis 160° C und Drücken von 50 bis 250 bar.

Die Herstellung von 2,3-Dichloranilin erfolgt dabei vorzugsweise über die Umsetzung von 2,3-Dichlornitrobenzol mit Wasserstoff in Gegenwart einer der vorgenannten Hydrierkatalysatoren unter Druck bei erhöhter Temperatur in Gegenwart eines Lösungsmittels und geringer Mengen einer basischen Verbindung, vorzugsweise gemäß US-A4 230 637, bevorzugt bei Temperaturen von 120° bis 160° C und Drücken von 50 bis 250 bar.

Die Herstellung von 4-Chloranilin erfolgt dabei vorzugsweise über die Umsetzung von 4-Chlornitrobenzol mit Wasserstoff in Gegenwart einer der vorgenannten Hydrierkatalysatoren unter Druck bei erhöhter Temperatur in Gegenwart eines Lösungsmittels und geringer Mengen einer basischen Verbindung, vorzugsweise gemäß US-A 4 230 637, bevorzugt bei Temperaturen von 120° bis 160° C und Drücken von 50 bis 250 bar.

Die Herstellung von 2-Chloranilin erfolgt dabei vorzugsweise über die Umsetzung von 2-Chlornitrobenzol mit Wasserstoff in Gegenwart einer der vorgenannten Hydrierkatalysatoren unter Druck bei erhöhter Temperatur in Gegenwart eines Lösungsmittels und geringer Mengen einer basischen Verbindung, vorzugsweise gemäß US-A 4 230 637, bevorzugt bei Temperaturen von 120° bis 160° C und Drücken von 50 bis 250 bar.

Durch die Behandlung mit Sauerstoff, insbesondere Luft, im alkalischen Medium kommt es zu einem drastischen Abbau der halogenierten, vorzugsweise Chlor- oder Brom- substituierte Hydroxyaniline. Das zuvor organisch gebundene Chlor oder Brom der halogenierten para- oder ortho-Hydroxyanilin-haltigen Verbindungen wird durch das erfindungsgemäße Verfahren in anorganisches Chlorid oder Bromid umgewandelt, was im Fall der Verwendung von Natronlauge letztlich als NaCl oder NaBr vorliegt, sodass der umweltschädliche Einfluss des wässrigen Mediums aufgehoben ist.

Dieser Abbau der halogenierten para- oder ortho-Hydroxyaniline kann mittels geeigneter analytischer Methoden, wie z.B. der Hochdruckflüssigkeitschromatographie (HPLC), verfolgt werden.

Die Erfindung wird durch die folgenden Beispiele erläutert, dies soll jedoch keine Einschränkung bedeuten.

### Ausführungsbeispiele:

### Beispiel A - Synthese von 3,4-Dichloranilin dessen Abwasser (wässriges Medium) nachbehandelt wurde

In einem Autoklav wurden 165 g Isopropanol und 25 g Wasser vorgelegt. Dazu gab man 1 g Hydrierkatalysator, der aus 1% Pt auf Aktivkohle bestand, drückte 40 bar Wasserstoff auf und erwärmte auf 150°C. In einem zweiten Autoklav bereitete man bei 80°C eine Schmelze von 80 g 3,4-Dichlornitrobenzol, 43,5 g Isopropanol und 6,5 g Wasser. Hier wurde auf 150 bar Wasserstoff aufgedrückt. Man dosierte dann die Schmelze in den ersten Autoklav bei 150°C, wobei ein Wasserstoffdruck von 100 bar aufrechterhalten wurde. Nach beendeter Dosierung wurde 12 min bei 150°C und 100 bar nachgerührt, wobei die Wasserstoffaufnahme zum Erliegen kam. Man kühlte auf 40°C ab, entspannte und filtrierte vom Katalysator ab. Das Filtrat wurde durch Destillation vom Isopropanol befreit und die Produktschmelze mit 100 g einer 1%igen Natronlauge gewaschen. Es wurde dabei ein pH >13 in der Wasserphase eingestellt, die 2-Amino-4,5-dichlorphenol enthielt.

Der Versuch wurde 3 Mal durchgeführt. Aus jedem der Synthesen wurde jeweils das Abwasser (wässriges Medium) (A1, A2, A3) entnommen, das chlorierte para- oder ortho-Hydroxyaniline, insbesondere 2-Amino-4,5-dichlorphenol, enthielt, und gemäß den folgenden Beispielen nachbehandelt.

### Beispiel 1

In 500 ml eines angefallenen Abwassers aus Beispiel A 1 mit einem pH-Wert > 13, das zuvor durch Wasserdampfdestillation weitgehend von 3,4-Dichloranilin befreit wurde, leitete man über 14 h bei 90°C über eine Fritte Luft ein. Im HPLC-Analyseverfahren ließen sich UV-spektroskopisch keine Dichlorhydroxyaniline mehr nachweisen (vorher: 0,031 Gew% 2-Amino-4,5-dichlorphenol). Der Anteil an absorbierbarem organischen Halogen hat sich im Zuge der Abwasseraufbereitung drastisch reduziert.

| | AOX [mg/l] bestimmt nach DIN EN ISO 9562 | Anteil an 2-Amino-4,5-dichlorphenol |
|---|---|---|
| Vor dem Behandlung mit Luft | 265 | 0,031 Gew% |
| Nach der erfindungsgemäßen Behandlung mit Luft | 79 | Nicht mehr nachweisbar < 0,002 Gew.% |

### Beispiel 2

In 379 ml eines angefallenen Abwassers aus Beispiel A2, das zuvor durch Strippung weitgehend von 3,4-Dichloranilin befreit wurde, leitete man über 28 h bei 90°C über eine Fritte Luft ein. Über HPLC lassen sich keine Dichlorhydroxyaniline mehr nachweisen (vorher: 0,031 Gew% 2-Amino-4,5-dichlorphenol). Der Anteil an absorbierbaren organischem Halogen hat sich im Zuge der Abwasseraufbereitung drastisch reduziert.

| | AOX [mg/l] | Anteil an 2-Amino-4,5-dichlorphenol |
|---|---|---|
| Vor der Behandlung mit Luft | 248 | 0,031 Gew% |
| Nach der erfindungsgemäßen Behandlung mit Luft | 58 | Nicht mehr nachweisbar < 0,002 Gew.% |

### Beispiel 3

In 450 ml eines angefallenen Abwassers aus Beispiel A3, das zuvor durch Strippung weitgehend von 3,4-Dichloranilin befreit wurde, leitete man über 24 h bei 85°C über eine Fritte Luft ein. Über HPLC ließen sich keine Dichlorhydroxyaniline mehr nachweisen (vorher: 0,021 Gew% 2-Amino-4,5-dichlorphenol). Der Anteil an absorbierbaren organischem Halogen hat sich im Zuge der Abwasseraufbereitung drastisch reduziert.

| | AOX [mg/l] | Anteil an 2-Amino-4,5-dichlorphenol |
|---|---|---|
| Vor der Behandlung mit Luft | 233 | 0,021 Gew% |
| Nach der erfindungsgemäßen Behandlung mit Luft | 62 | Nicht mehr nachweisbar < 0,002 Gew.% |

Aus den Beispielen ist ersichtlich, wie effektiv die Entfernung von halogenierten para- oder ortho-Hydroxyanilinen in Abwässern durch die erfindungsgemäße Wärme-behandlung des wässrigen Mediums (Abwasser) in Kombination mit der Behandlung mit Luft ist.

## Patentansprüche

1. Verfahren zum Abbau der halogenierten para- oder ortho-Hydroxyaniline aus wässrigen Medien, **dadurch gekennzeichnet, dass** das wässrige Medium bei Temperaturen von 70°C bis 100°C bei pH-Werten von 10 bis 14 mit sauerstoffhaltigem Gas, vorzugsweise Luft, behandelt wird.

2. Verfahren nach Anspruch 1, **dadurch gekennzeichnet, dass** es sich bei den halogenierten para- oder ortho-Hydroxyanilinen um Chlor- oder Brom-subsituierte Hydroxyaniline handelt.

3. Verfahren nach Anspruch 1 oder 2, **dadurch gekennzeichnet, dass** der pH-Wert größer als 13 ist.

4. Verfahren nach Anspruch 3, **dadurch gekennzeichnet, dass** zur Einstellung des pH-Wertes von > 13 starke Basen, vorzugsweise Alkalimetallhydroxide und -carbonate sowie Erdalkalimetallhydroxide, eingesetzt werden.

5. Verfahren nach einem der Ansprüche 1 bis 4 **dadurch gekennzeichnet, dass** die Behandlung bei Temperaturen von 80°C bis 100°C, bevorzugt von 90°C bis 100°C durchgeführt wird.

6. Verfahren nach einem der Ansprüche 1 bis 5, **dadurch gekennzeichnet, dass** das sauerstoffhaltige Gas, vorzugsweise Luft bei einem Druck von 1 bis 300 bar, vorzugsweise 2 bis 6 bar eingesetzt wird.

7. Verfahren nach einem der Ansprüche 1 bis 6, **dadurch gekennzeichnet, dass** die Behandlung mit Luft über einen Zeitraum von 2 bis 50 h, vorzugsweise 10 bis 30 h erfolgt.

8. Verfahren nach einem der Ansprüche 1 bis 7, **dadurch gekennzeichnet, dass** das wässrige Medium aus der Herstellung von Chlor- oder Brom- substituierten Anilinen durch katalytische Hydrierung von Halogennitroaromaten mit Halogen = Cl oder Br stammt.

## Claims

1. Method for the degradation of halogenated para- or ortho-hydroxyanilines from aqueous media, **characterized in that** the aqueous medium is treated at temperatures from 70°C to 100°C at pH values of 10 to 14 with oxygen-containing gas, preferably air.

2. Method according to Claim 1, **characterized in that** the halogenated para- or ortho-hydroxyanilines are chlorine- or bromine-substituted hydroxyanilines.

3. Method according to Claim 1 or 2, **characterized in that** the pH is greater than 13.

4. Method according to Claim 3, **characterized in that** strong bases are used, preferably alkali metal hydroxides and carbonates and also alkaline earth metal hydroxides, to adjust the pH to > 13.

5. Method according to any of Claims 1 to 4, **characterized in that** the treatment is carried out at temperatures of 80°C to 100°C, preferably of 90°C to 100°C.

6. Method according to any of Claims 1 to 5, **characterized in that** the oxygen-containing gas, preferably air, is used at a pressure of 1 to 300 bar, preferably 2 to 6 bar.

7. Method according to any of Claims 1 to 6, **characterized in that** the treatment with air is effected over a period of 2 to 50 h, preferably 10 to 30 h.

8. Method according to any of Claims 1 to 7, **characterized in that** the aqueous medium from the production of chlorine- or bromine-substituted anilines originates from catalytic hydrogenation of halonitroaromatics where halogen = Cl or Br.

## Revendications

1. Procédé pour la dégradation des para-hydroxyanilines ou ortho-hydroxyanilines halogénées de milieu aqueux, **caractérisé en ce que** le milieu aqueux est traité à des températures de 70 °C à 100 °C à des valeurs de pH de 10 à 14 avec un gaz contenant de l'oxygène, de préférence l'air.

2. Procédé selon la revendication 1, **caractérisé en ce que** les para-hydroxyanilines ou ortho-hydroxyanilines halogénées sont des hydroxyanilines substituées par chloro ou bromo.

3. Procédé selon la revendication 1 ou 2, **caractérisé en ce que** la valeur de pH est supérieure à 13.

4. Procédé selon la revendication 3, **caractérisé en ce que** pour l'ajustement de la valeur de pH > 13, des bases fortes, de préférence des hydroxydes et des carbonates de métal alcalin ainsi que des hydroxydes de métal alcalino-terreux sont utilisés.

5. Procédé selon l'une quelconque des revendications 1 à 4, **caractérisé en ce que** le traitement est mis en œuvre à des températures de 80 °C à 100 °C, préférablement de 90 °C à 100 °C.

6. Procédé selon l'une quelconque des revendications 1 à 5, **caractérisé en ce que** le gaz contenant de l'oxygène, de préférence l'air est utilisé à une pression de 1 à 300 bars, de préférence 2 à 6 bars.

7. Procédé selon l'une quelconque des revendications 1 à 6, **caractérisé en ce que** le traitement avec de l'air est réalisé sur une période de temps de 2 à 50 h, de préférence 10 à 30 h.

8. Procédé selon l'une quelconque des revendications 1 à 7, **caractérisé en ce que** le milieu aqueux provient de la préparation d'anilines substituées par chloro ou bromo par hydrogénation catalytique de composés halogénonitroaromatiques avec halogène = Cl ou Br.
